# EUROPEAN PATENT SPECIFICATION

(11) **EP 4 198 443 B1**
(45) Date of publication and mention of the grant of the patent: **18.09.2024**
(21) Application number: 21461634.4
(22) Date of filing: 14.12.2021
(51) Int. Cl.: F28F 27/02, F28D 1/03, F28D 1/047

(54) **HEAT EXCHANGER**
WÄRMETAUSCHER
ÉCHANGEUR DE CHALEUR

(43) Date of publication of application: 21.06.2023
(73) Proprietor: Hamilton Sundstrand Corporation, Charlotte, NC 28217 (US)
(72) Inventor: Horoszczak, Adam, 51-317 Wroclaw (PL); Ostrowski, Maciej, 51-317 Wroclaw (PL)
(74) Representative: Dehns

(56) References cited:
- US-A1- 2014 044 525
- US-A1- 2015 096 729

## Description

### TECHNICAL FIELD

The present disclosure relates to heat exchangers having a plate-fin construction. A heat exchanger core according to the preamble of claim 1 is known for example from document US 2015/096 729 A1.

### BACKGROUND

In engines and engine systems heat is generated by various parts of the system. For example, heat is generated by rotating components, by bearings and gears as a result of friction etc. Often an oil flow system is provided through which oil at an adequately cool temperature can flow through the system and dissipate heat. The oil may need to be initially cooled before it flows through the system. Further, as the oil flows through the system to dissipate heat, the temperature of the oil will, of course, increase. Cooling devices e.g. heat exchangers can be provided through which the hot oil can flow and be cooled by a cooling medium e.g. air, oil, fuel. In addition to providing dissipation of heat generated by engine system parts, cooled oil may also be required to be used in generators e.g. in a variable frequency generator (VFG). A conventional oil cooler or heat exchanger using air as the cooling fluid comprises and arrangement of alternately stacked plates and fins. The plates define channels through which the oil to be cooled will flow from an oil inlet to an oil outlet. Conventionally, the oil flow channels will extend in a first direction and the air flow will be in a direction perpendicular to that direction i.e. the cooling air provides a crossflow relative to the oil flow. In a conventional air oil cooler, oil is provided along a supply tube to a heat exchanger header or manifold, The oil then flows through the heat exchanger channels which surround channels with the cooling air. The cooled oil then exits the tubes at an outlet. Such a system may also be provided with a pressure release vale at the end of the supply tube distal from the inlet to divert the oil directly to an outlet rather than to the heat exchanger, via a bypass conduit, if the oil is too cold and dense during start up.

In such systems, as mentioned above, the oil first flows along a supply conduit before it enters the heat exchanger and this initial flow path is not involved in the heat exchange process. Once the oil enters the heat exchanger, it makes a single pass through the heat exchanger channels from the header to the outlet. The heat exchanger core may include one layer that is enlarged with respect to the other layers, as an initial decongealing layer. This layer has a lower pressure drop and allows initially dense oil to pass through before it can flow through the other channels or layers, so as to warm up the rest of the core to begin normal operation where the oil flows through the heat exchange tubes.

The supply conduit that provides the oil to the heat exchanger is, as mentioned above, typically located near the heat exchanger and does not participate in the heat transfer process. This conduit, however, particularly when filled with oil, adds significantly to the mass of the heat exchanger. These problems may also exist in coolers for other fluids.

In addition, the wider decongealing layer, in having a low pressure drop geometry, decreases the overall thermal performance of the heat exchanger and reduces efficiency with respect to system size.

There is, therefore, a need for an improved fluid cooler or heat exchanger.

### SUMMARY

The inventors have made us of the additional flexibility in design provided by advances in 3D printing/additive manufacturing to solve the above-mentioned problems or shortcomings in known heat exchangers such as air-oil coolers.

According to the disclosure, there is provided a heat exchanger core comprising a medium inlet and a medium outlet for the heat transfer medium to be cooled and a plurality of channels extending from a first end to a second end of the heat exchanger core and defining flow conduits therebetween from the medium inlet to the medium outlet, the heat exchanger core further comprising a plurality of fins between the plates for directing a coolant medium across the flow conduit, and wherein one of the flow conduits has a larger cross-section than the other flow conduits, and wherein the inlet is provided at the one of the flow conduits between the first end and the second end of the heat exchanger core, the second end of the heat exchanger core forming a medium header into which the medium flows from a second end of the one of the flow conduits and from which the medium flows into an inlet end of the other flow conduits, the other flow conduits each having an outlet end adjacent the first end of the heat exchanger core, the outlet ends being in medium flow connection with the medium outlet of the heat exchanger core. The one flow conduit is a middle conduit of the plurality of flow conduits.

The inlet may be provided at various locations on the one flow conduits between the first end second ends of the heat exchanger core. In the example shown, it is provided at the end of the conduit closest to the outlet.

The heat exchanger may also include a pressure release valve in communication with the header configured to direct the medium from the one flow conduit to the outlet via a bypass conduit external to the heat exchanger core.

The heat exchanger may be an oil cooling heat exchanger, whereby the heat transfer fluid is oil. In other examples, a medium other than oil can be used.

The coolant may be any medium, but in the examples described is air.

The heat exchanger may be part of a generator e.g. a VFG which requires oil not to exceed a specific temperature and so requires cooled oil.

The principles of the disclosure can, however, be used in coolers for other fluids and using coolants other than air, for applications other than generators.

Thus, in the cooler according to the disclosure, the medium e.g. oil supply conduit is incorporated into the heat exchanger itself, thus taking part in the heat transfer process and also performing the function of the decongealing layer. Furthermore, because the inlet and outlet are at the same end of the heat exchanger, the fluid e.g. oil makes two passes through the cooler thus improving thermal performance of the system.

### BRIEF DESCRIPTION

Examples according to the disclosure will now be described with reference to the drawings. It should be noted, however, that these are examples only and variations are possible within the scope of the claims.
Figure 1 is a simplified view of a conventional air oil cooler.
Figure 2 is a simplified view of a heat exchanger according to the disclosure.
Figure 3 is a 3D view of a heat exchanger according to the disclosure.
Figures 4A and 4B show, in more detail, the two ends of a heat exchanger such as shown in Fig. 3

### DETAILED DESCRIPTION

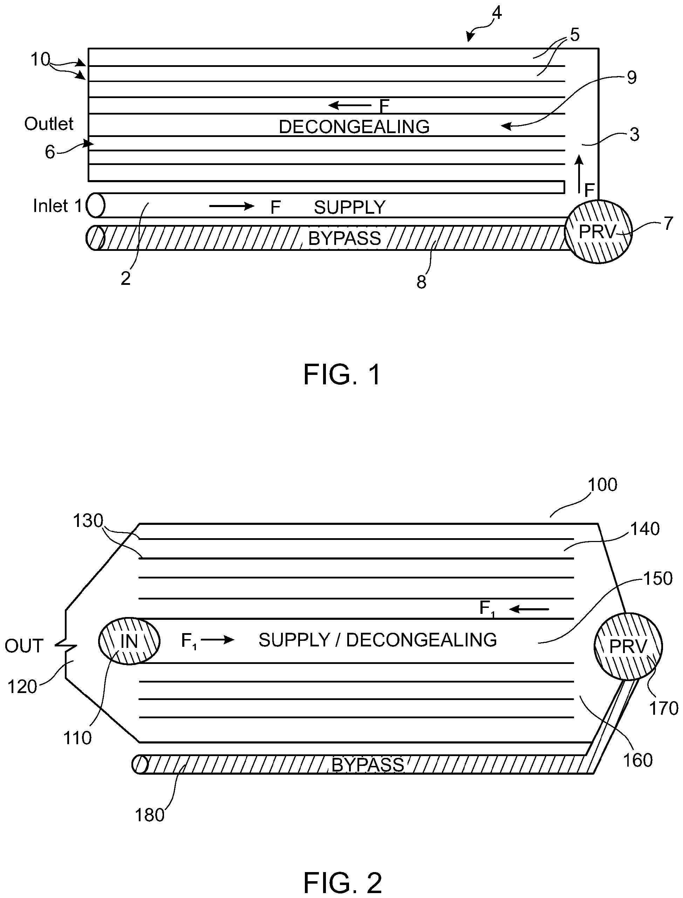

A conventional heat exchanger such as an air-oil cooler for use in an engine has been described above and will only be described briefly below with reference to Fig. 1.

The fluid to be cooled is supplied to the system at an inlet 1 of a supply conduit 2 along which it flows in the direction of arrow F to a fluid header 3 of a heat exchanger core 4. The manifold 3 leads into a plurality of flow conduits 5 defined between plates 10. In normal operation, the fluid to be cooled, provided to the core via the supply conduit 2, will flow across the heat exchanger core 4 via the flow conduits 5 to the outlet 6 of the heat exchanger. A cooling fluid e.g. air (not shown) will flow across the flow conduits to exchange heat with the oil in the flow conduits 5 to cool the oil.

A pressure release valve, PRV, 7 may be provided at the header end of the supply conduit. If the fluid is too cold and dense to be able to flow through the heat exchanger core, the PRV 7 will direct the fluid to the outlet via a bypass conduit 8 instead of via the heat exchanger core.

The heat exchange core 5 includes one conduit 9 defined between the plate that has a larger cross-section than the other conduits 5 and, therefore, a lower pressure drop.

At the start of operation of the heat exchanger, when the fluid may be relatively dense, it will tend to flow through the larger cross-section conduit 9 in preference to the other, narrower conduits 5. This provides a fluid flow through the core that primes or warms the heat exchanger to begin normal operation, after which the oil or other fluid will flow through the heat exchanger conduits 5 from the header to the outlet 6.

In the conventional heat exchanger, the supply conduit 2 and the bypass conduit 8 are attached to the header and are near the heat exchanger core. They therefore add to the size of the overall system without contributing to the heat transfer process.

The design of the heat exchanger according to this disclosure takes advantage of the fact that additive manufacturing/3D printing allows for a greater range of designs. The arrangement according to the disclosure will be described by way of example with reference to Figs. 2, 3, 4A and 4B.

Fig. 2 shows a heat exchanger according to the disclosure. The heat exchanger comprises a heat exchanger core 100 having an inlet 110 for the medium e.g. oil to be cooled and an outlet 120 for the medium after it has been cooled by the heat transfer process of the heat exchanger. As with the conventional heat exchanger of Fig. 1, the heat exchanger core 100 comprises a plurality of adjacent plates 130 defining between then flow conduits 140 for the fluid to be cooled. A cooling medium e.g. air (not shown) is flowed across the plates to exchange heat with the medium e.g. oil in the flow conduits.

In contrast to the arrangement of Fig. 1, the heat exchanger inlet 110, according to the disclosure, is actually formed in the heat exchanger core in flow communication with the supply conduit 150 through which the medium entering the inlet flow, which is one of a plurality of flow conduits defined between adjacent plates of the heat exchanger, but between plates that are spaced apart by a greater distance than the plates defining the other conduits, such that the supply conduit 150 has a larger cross-section than the other conduits 140. The medium flows from the inlet 110 along the supply conduit 150 in the direction of arrow F1 to the header 160 at the other end of the heat exchanger core. As well as supplying the medium for heat exchange, this initial flow through the supply conduit 150 will also prime or warm the core for normal operation as with the decongealing function described above. The inlet 110 is shown in this example as being at the same end of the core as the outlet, but the inlet could also be located at a more central position relative to the core ends.

The supplied medium then reaches the header 160 and then, in normal operation, flows back (F1) through the core via the other conduits 140 back to the outlet 120 which is at the same end of the core as the inlet 110. The cooled medium then exits the heat exchanger.

As with the system of Fig. 1, a PRV 170 may be provided to divert too-dense medium (e.g. during start-up) directly to the outlet via a bypass conduit 180 rather than through the heat exchanger. The medium has, however, already passed through the core via the supply conduit 150 and so has served the purpose of initialising the system and beginning to warm the core. This means that the PRV can close more quickly than with conventional systems and the heat exchanger can start normal operation more quickly.

The enlarged supply conduit 150, being located within the heat exchanger core, provides the function of a supply channel but also performs the decongealing function and, further, provides a first pass of the medium through the heat exchanger. The medium then undergoes a second pass through the heat exchanger when it flows from the header to the outlet.

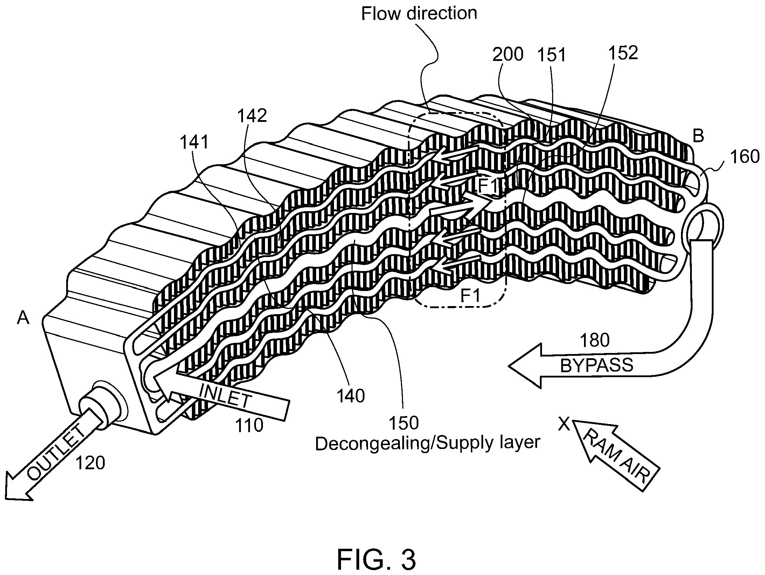

Figure 3 shows the arrangement in more detail. Both the inlet 110 and the outlet 120 are provided at the same end A of the heat exchanger core. Fluid e.g. oil from the inlet flows to the header 160 at the other end B of the core initially along the supply conduit 150 defined between two plates 151 152 of the core. The oil arrives at the header 160 and, in normal operation, is directed back towards the outlet via flow conduits 140 which are also defined between adjacent plates 141, 142. The spacing between the plates 151, 152 defining the supply conduit 150 is greater than between the plates 141, 142 defining the other flow conduits (the return flow conduits 140), allowing denser fluid to initially flow through the core. In an initial pass, in warm-up operation, the PRV 170 will direct the fluid coming through the supply conduit 150 to the output via the bypass conduit 180 as explained above. Once the core is warmed, fluid coming into the heat exchanger along the supply conduit 150 makes a second pass through the heat exchanger along the return conduits 140 to the outlet 120.

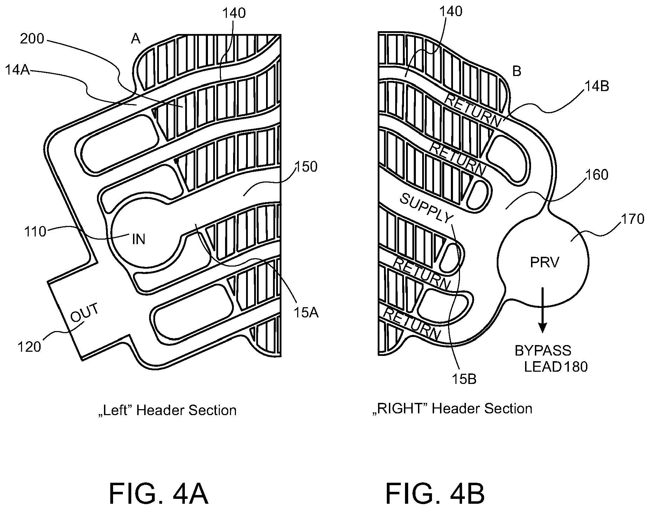

Figs. 3, 4A and 4B also show the fins 200 at alternate layers of the core between the flow conduits 140, 150 via which the cooling air (e.g. engine RAM air) entering the core from a first side (arrow X) flows across the flow conduits. The cold air performs heat transfer with the hot or warm medium e.g. oil in the flow conduits to cool the medium and the warmed air exits the core on the other side (not shown).

The plates are preferably formed with an undulating shape from the first end A to the second end B of the core as this creates turbulence which improves the heat transfer properties of the heat exchanger. The shapes of the channels may be freely varied as desired and this is facilitated due to the use of additive manufacturing.

Because the larger cross section conduit in the heat exchanger core provides the function of the supply conduit as well as the decongealing function, this design does away with the need for an additional supply conduit outside of the core as in the existing designs. The two pass operation also improves thermal performance and allows the core to be warned more quickly than with conventional systems. The overall system is thus smaller, lighter and more efficient.

## Claims

1. A heat exchanger core comprising a medium inlet (110) and a medium outlet (120) for the heat transfer medium to be cooled and a plurality of plates (141, 142, 151, 152) extending from a first end (A) to a second end (B) of the heat exchanger core and defining flow conduits (140, 150) therebetween from the medium inlet to the medium outlet, the heat exchanger core further comprising a plurality of fins (200) between the plates for directing a coolant medium across the flow conduit, and wherein one of the flow conduits (150) has a larger cross-section than the other flow conduits (140), and wherein the inlet is provided at the one of the flow conduits (150) between the first end and the second end of the heat exchanger core, the second end of the heat exchanger core forming a medium header (160) into which the fluid flows from a second end (15B) of the one of the flow conduits and from which the medium flows into an inlet end (14B) of the other flow conduits, the other flow conduits each having an outlet end (14A) adjacent the first end of the heat exchanger core, the outlet ends being in medium flow connection with the medium outlet of the heat exchanger core; and **characterised in that** the one flow conduit (150) is a middle conduit of the plurality of flow conduits (140, 150).

2. The heat exchanger core of claim 1, further comprising a pressure release valve (170) in communication with the header (160) and configured to direct the medium from the one flow conduit (150) to the outlet via a bypass conduit (180) external to the heat exchanger core.

3. The heat exchanger core of claim 1 or 2, being an oil cooling heat exchanger whereby the heat transfer fluid is air, oil or fuel.

4. The heat exchanger core of any preceding claim, wherein the coolant medium is air, oil or fuel.

5. The heat exchanger core of any preceding claim, being a heat exchanger of a generator.

6. The heat exchanger core of claim 5, wherein the generator is a variable frequency generator.

7. The heat exchanger core of any preceding claim, wherein the coolant medium is RAM air.

8. The heat exchanger core of any preceding claim, wherein the inlet (110) is provided at a first end (15A) of the one of the flow conduits (150) adjacent the first end of the heat exchanger core.

9. The heat exchanger core of any preceding claim, whereby the flow conduits (140 150) have an undulating shape from the first end (A) to the second end (B) of the core.

10. The heat exchanger core of any preceding claim formed by additive manufacturing.

11. A method of forming a heat exchanger core as claimed in any preceding claim, comprising forming the core as a single component using additive manufacturing.

## Patentansprüche

1. Wärmetauscherkern, der einen Mediumeinlass (110) und einen Mediumauslass (120) für das zu kühlende Wärmeübertragungsmedium und eine Vielzahl von Platten (141, 142, 151, 152) umfasst, die sich von einem ersten Ende (A) zu einem zweiten Ende (B) des Wärmetauscherkerns erstrecken und zwischen sich Strömungsleitungen (140, 150) vom Mediumeinlass zum Mediumauslass definieren, wobei der Wärmetauscherkern zusätzlich eine Vielzahl von Rippen (200) zwischen den Platten umfasst, um ein Kühlmittelmedium durch die Strömungsleitung zu leiten, und wobei eine der Strömungsleitungen (150) einen größeren Querschnitt als die anderen Strömungsleitungen (140) aufweist, und wobei der Einlass an der einen der Strömungsleitungen (150) zwischen dem ersten Ende und dem zweiten Ende des Wärmetauscherkerns vorgesehen ist, wobei das zweite Ende des Wärmetauscherkerns einen Mediumsverteiler (160) bildet, in den das Fluid von einem zweiten Ende (158) der einen der Strömungsleitungen strömt und von dem das Medium in ein Einlassende (14B) der anderen Strömungsleitungen strömt, wobei die anderen Strömungsleitungen jeweils ein Auslassende (14A) neben dem ersten Ende des Wärmetauscherkerns aufweisen, wobei die Auslassenden in Mediumströmungsverbindung mit dem Mediumauslass des Wärmetauscherkerns stehen; und **dadurch gekennzeichnet, dass** die eine Strömungsleitung (150) eine mittlere Leitung der Vielzahl von Strömungsleitungen (140, 150) ist.

2. Wärmetauscherkern nach Anspruch 1, der zusätzlich ein Druckablassventil (170) umfasst, das mit dem Verteiler (160) in Kommunikation steht und so vorgesehen ist, dass es das Medium von der einen Strömungsleitung (150) über eine Bypass-Leitung (180) außerhalb des Wärmetauscherkerns zum Auslass leitet.

3. Wärmetauscherkern nach Anspruch 1 oder 2, der ein Ölkühlungswärmetauscher ist, wobei das Wärmeübertragungsfluid Luft, Öl oder Kraftstoff ist.

4. Wärmetauscherkern nach einem der vorhergehenden Ansprüche, wobei das Kühlmedium Luft, Öl oder Kraftstoff ist.

5. Wärmetauscherkern nach einem der vorhergehenden Ansprüche, der ein Wärmetauscher eines Generators ist.

6. Wärmetauscherkern nach Anspruch 5, wobei der Generator ein Generator mit variabler Frequenz ist.

7. Wärmetauscherkern nach einem der vorhergehenden Ansprüche, wobei das Kühlmedium RAM-Luft ist.

8. Wärmetauscherkern nach einem der vorhergehenden Ansprüche, wobei der Einlass (110) an einem ersten Ende (15A) der einen der Strömungsleitungen (150) neben dem ersten Ende des Wärmetauscherkerns vorgesehen ist.

9. Wärmetauscherkern nach einem der vorhergehenden Ansprüche, wobei die Strömungsleitungen (140, 150) vom ersten Ende (A) zum zweiten Ende (B) des Kerns eine gewellte Form aufweisen.

10. Wärmetauscherkern nach einem der vorhergehenden Ansprüche, der durch additive Fertigung gebildet wird.

11. Verfahren zur Bildung eines Wärmetauscherkerns nach einem der vorhergehenden Ansprüche, das die Bildung des Kerns als ein einziges Bauteil unter Verwendung additiver Fertigung umfasst.

## Revendications

1. Noyau d'échangeur de chaleur comprenant une entrée de milieu (110) et une sortie de milieu (120) pour le milieu de transfert de chaleur à refroidir et une pluralité de plaques (141, 142, 151, 152) se prolongeant à partir d'une première extrémité (A) jusqu'à une seconde extrémité (B) du noyau d'échangeur de chaleur et définissant des conduits d'écoulement (140, 150) entre celles-ci à partir de l'entrée de milieu jusqu'à la sortie de milieu, le noyau d'échangeur de chaleur comprenant également une pluralité d'ailettes (200) entre les plaques pour diriger un milieu de refroidissement à travers le conduit d'écoulement, et dans lequel l'un des conduits d'écoulement (150) a une section transversale plus grande que les autres conduits d'écoulement (140), et dans lequel l'entrée est prévue au niveau de l'un des conduits d'écoulement (150) entre la première extrémité et la seconde extrémité du noyau d'échangeur de chaleur, la seconde extrémité du noyau d'échangeur de chaleur formant un collecteur de milieu (160) dans lequel le fluide s'écoule à partir d'une seconde extrémité (158) de l'un des conduits d'écoulement et à partir duquel le milieu s'écoule dans une extrémité d'entrée (14B) des autres conduits d'écoulement, les autres conduits d'écoulement ayant chacun une extrémité de sortie (14A) adjacente à la première extrémité du noyau d'échangeur de chaleur, les extrémités de sortie étant en connexion d'écoulement de milieu avec la sortie de milieu du noyau d'échangeur de chaleur ; et **caractérisé en ce que** le conduit d'écoulement (150) est un conduit intermédiaire de la pluralité de conduits d'écoulement (140, 150).

2. Noyau d'échangeur de chaleur selon la revendication 1, comprenant également une soupape de décharge de pression (170) en communication avec le collecteur (160) et configurée pour diriger le milieu à partir du conduit d'écoulement (150) jusqu'à la sortie via un conduit de dérivation (180) externe au noyau d'échangeur de chaleur.

3. Noyau d'échangeur de chaleur selon la revendication 1 ou 2, étant un échangeur de chaleur de refroidissement d'huile, moyennant quoi le fluide de transfert de chaleur est de l'air, de l'huile ou du carburant.

4. Noyau d'échangeur de chaleur selon une quelconque revendication précédente, dans lequel le milieu de refroidissement est de l'air, de l'huile ou du carburant.

5. Noyau d'échangeur de chaleur selon une quelconque revendication précédente, étant un échangeur de chaleur d'un générateur.

6. Noyau d'échangeur de chaleur selon la revendication 5, dans lequel le générateur est un générateur à fréquence variable.

7. Noyau d'échangeur de chaleur selon une quelconque revendication précédente, dans lequel le milieu de refroidissement est de l'air RAM.

8. Noyau d'échangeur de chaleur selon une quelconque revendication précédente, dans lequel l'entrée (110) est prévue au niveau d'une première extrémité (15A) de l'un des conduits d'écoulement (150) adjacente à la première extrémité du noyau d'échangeur de chaleur.

9. Noyau d'échangeur de chaleur selon une quelconque revendication précédente, dans lequel les conduits d'écoulement (140, 150) ont une forme ondulée à partir de la première extrémité (A) jusqu'à la seconde extrémité (B) du noyau.

10. Noyau d'échangeur de chaleur selon une quelconque revendication précédente formé par fabrication additive.

11. Procédé de formation d'un noyau d'échangeur de chaleur selon une quelconque revendication précédente, comprenant la formation du noyau en tant que composant unique à l'aide d'une fabrication additive.
